# EUROPEAN PATENT APPLICATION

(11) **EP 4 207 645 A1**
(43) Date of publication of application: **05.07.2023**
(21) Application number: 21876926.3
(22) Date of filing: 07.09.2021

(54) **NETWORK INTENT MONITORING METHOD, NETWORK INTENT MONITORING SYSTEM AND STORAGE MEDIUM**

(30) Priority: 10.10.2020 CN 202011077055
(71) Applicant: Huawei Technologies Co., Ltd., Shenzhen, Guangdong 518129 (CN)
(72) Inventor: JIANG, Zhongping, Shenzhen, Guangdong 518129 (CN); LU, Binghao, Shenzhen, Guangdong 518129 (CN)
(74) Representative: Grünecker Patent- und Rechtsanwälte PartG mbB
(86) International application number: PCT/CN2021/116803
(87) International publication number: WO 2022/073406

(57) **Abstract**

Embodiments of this application provide a network intention monitoring method, a network intention monitoring system, and a storage medium, to resolve the following problem: After a network intention is delivered, because operation and maintenance personnel cannot monitor and verify an implementation status of the network intention, the operation and maintenance personnel can discover, only when a network fault occurs or service quality deteriorates obviously, that a network status is obviously different from the network intention, leading to low network operation and maintenance efficiency. The foregoing method includes: A network intention monitoring platform obtains a network intention to be monitored by a user, where the network intention includes a plurality of network sub-intentions; determines a plurality of pieces of analysis information for the plurality of network sub-intentions based on the plurality of network sub-intentions, real-time network information, and a plurality of analysis engines corresponding to the plurality of network sub-intentions; determines monitoring result information based on the plurality of pieces of analysis information and a monitoring engine; and performs network optimization requirement analysis based on the monitoring result information.

## Description

This application claims priority to Chinese Patent Application No. 202011077055.4, filed with the China National Intellectual Property Administration on October 10, 2020 and entitled "NETWORK INTENTION MONITORING METHOD, NETWORK INTENTION MONITORING SYSTEM, AND STORAGE MEDIUM", which is incorporated herein by reference in its entirety.

### TECHNICAL FIELD

This application relates to the field of communication technologies, and in particular, to a network intention monitoring method, a network intention monitoring system, and a storage medium.

### BACKGROUND

After a user performs service provisioning for a network based on a user intention by using a network management platform or controller based on a software defined networking (Software Defined Networking, SDN) technology, the user expects to learn whether a current network status satisfies the previously specified user intention. In a conventional technology, an administrator of the user needs to manually check configurations, logs, alarms, and other data on a network management platform and a network device, and learn of a real network status through analysis. As a result, operation and maintenance workload of the administrator is relatively heavy. Alternatively, the administrator passively discovers, only after a service fault occurs or service quality deteriorates obviously, that a network status is obviously different from a previously specified user intention. Consequently, it takes a long time to perform fault analysis and locating, and locating accuracy is low, greatly affecting a service.

### SUMMARY

Embodiments of this application provide a network intention monitoring method, a network intention monitoring system, and a storage medium, to resolve the following problem: After a network intention is delivered, because operation and maintenance personnel cannot monitor and verify an implementation status of the network intention, the operation and maintenance personnel can discover, only when a network fault occurs or service quality deteriorates obviously, that a network status is obviously different from the network intention, leading to low network operation and maintenance efficiency.

To resolve the foregoing technical problem, the technical solutions of this application include the following content.

According to a first aspect, an embodiment of this application provides a network intention monitoring method. The method may be used for network intention monitoring and verification. The method includes: obtaining a to-be-monitored network intention, where the network intention includes a plurality of network sub-intentions, the plurality of network sub-intentions are respectively corresponding to a plurality of types, and an advantage of classifying the network intention into the plurality of network sub-intentions based on dimensions of a configuration operation and a network function of a network element device in a network is that the network intention is monitored and analyzed more precisely; determining a plurality of pieces of analysis information for the plurality of network sub-intentions based on the plurality of network sub-intentions, real-time network information, and a plurality of analysis engines corresponding to the plurality of network sub-intentions, where analysis information includes analysis of an execution status of a network sub-intention in a current network environment, a comparison result may be obtained by comparing the analysis information with the network sub-intention, and a difference between a current network status and the network sub-intention may be obtained based on the comparison result; determining monitoring result information based on the plurality of pieces of analysis information and a monitoring engine; and performing network optimization requirement analysis based on the monitoring result information. According to the method, operation and maintenance personnel may monitor and verify a running status of a network intention in a current network, discover a difference between a network running status and the network intention in real time, and optimize and adjust the network in a timely manner. In this way, a case in which passive network fault locating is performed when a network fault occurs is avoided, real-time accuracy of the network intention is ensured, and network operation and maintenance efficiency is improved.

In some embodiments, the method further includes: the plurality of network sub-intentions are respectively corresponding to a plurality of types, and the plurality of types include a service reachability type, a service quality of service type, a service security type, a service compliance type, a service audit type, and/or a service fault type. Corresponding network sub-intentions are respectively a service reachability sub-intention, a service quality of service sub-intention, a service security sub-intention, a service compliance sub-intention, a service audit sub-intention, and/or a service fault sub-intention.

In some embodiments, the method further includes: determining service reachability sub-intention analysis information based on the service reachability sub-intention, real-time network information, and an analysis engine corresponding to the service reachability sub-intention; determining service quality of service sub-intention analysis information based on the service quality of service sub-intention, the real-time network information, and an analysis engine corresponding to the service quality of service sub-intention; determining security sub-intention analysis information based on the service security sub-intention, the real-time network information, and an analysis engine corresponding to the service security sub-intention; determining compliance sub-intention analysis information based on the service compliance sub-intention, the real-time network information, and an analysis engine corresponding to the service compliance sub-intention; determining audit sub-intention analysis information based on the service audit sub-intention, the real-time network information, and an analysis engine corresponding to the service audit sub-intention; and/or determining fault sub-intention analysis information based on the fault sub-intention, the real-time network information, and an analysis engine corresponding to the fault sub-intention. Based on analysis engines corresponding to different types of sub-intentions and the real-time network information, different types of sub-intention analysis information may be obtained. In this way, a network intention implementation status can be analyzed and verified more comprehensively, helping the operation and maintenance personnel comprehensively learn the network intention implementation status.

In some embodiments, the method further includes: the plurality of pieces of analysis information include the service reachability sub-intention analysis information, the service quality of service sub-intention analysis information, the security sub-intention analysis information, the compliance sub-intention analysis information, the audit sub-intention analysis information, and/or the fault sub-intention analysis information.

In some embodiments, the method further includes: if the monitoring result information satisfies the network intention, network optimization is not required; and/or if the monitoring result information does not satisfy the network intention, network optimization is required. Based on the monitoring result information, the operation and maintenance personnel may monitor and verify a running status of a network intention in a current network, discover a difference between a network running status and the network intention in real time, and optimize and adjust the network in a timely manner. In this way, a case in which passive network fault locating is performed when a network fault occurs is avoided, real-time accuracy of the network intention is ensured, and network operation and maintenance efficiency is improved.

According to a second aspect, an embodiment of this application provides a network intention monitoring system. The system includes:
a monitoring intention obtaining module, configured to obtain a to-be-monitored network intention;
a monitoring intention classification module, configured to classify the network intention into a plurality of network sub-intentions, where the plurality of network sub-intentions are respectively corresponding to a plurality of types;
a monitoring intention analysis module, configured to determine a plurality of pieces of analysis information for the plurality of network sub-intentions based on the plurality of network sub-intentions, real-time network information, and a plurality of analysis engines corresponding to the plurality of network sub-intentions, where
the monitoring intention analysis module is further configured to determine monitoring result information based on the plurality of pieces of analysis information and a monitoring engine; and
a monitoring result presentation module, configured to perform network optimization requirement analysis based on the monitoring result information.

In some embodiments, the plurality of network sub-intentions are respectively corresponding to a plurality of types, and the plurality of types include a service reachability type, a service quality of service type, a service security type, a service compliance type, a service audit type, and/or a service fault type. Corresponding network sub-intentions are respectively a service reachability sub-intention, a service quality of service sub-intention, a service security sub-intention, a service compliance sub-intention, a service audit sub-intention, and/or a service fault sub-intention.

In some embodiments, service reachability sub-intention analysis information is determined based on the service reachability sub-intention, real-time network information, and an analysis engine corresponding to the service reachability sub-intention; service quality of service sub-intention analysis information is determined based on the service quality of service sub-intention, the real-time network information, and an analysis engine corresponding to the service quality of service sub-intention; security sub-intention analysis information is determined based on the service security sub-intention, the real-time network information, and an analysis engine corresponding to the service security sub-intention; compliance sub-intention analysis information is determined based on the service compliance sub-intention, the real-time network information, and an analysis engine corresponding to the service compliance sub-intention; audit sub-intention analysis information is determined based on the service audit sub-intention, the real-time network information, and an analysis engine corresponding to the service audit sub-intention; and/or fault sub-intention analysis information is determined based on the fault sub-intention, the real-time network information, and an analysis engine corresponding to the fault sub-intention. Based on analysis engines corresponding to different types of sub-intentions and the real-time network information, different types of sub-intention analysis information may be obtained. In this way, a network intention implementation status can be analyzed and verified more comprehensively, helping the operation and maintenance personnel comprehensively learn the network intention implementation status.

In some embodiments, the plurality of pieces of analysis information include the service reachability sub-intention analysis information, the service quality of service sub-intention analysis information, the security sub-intention analysis information, the compliance sub-intention analysis information, the audit sub-intention analysis information, and/or the fault sub-intention analysis information.

In some embodiments, if the monitoring result information satisfies the network intention, network optimization is not required; and/or if the monitoring result information does not satisfy the network intention, network optimization is required.

According to a third aspect, an embodiment of this application provides a storage medium for monitoring a network intention. When the storage medium runs on a computer, the computer is enabled to perform the method in any one of the first aspect or the possible implementations of the first aspect.

### BRIEF DESCRIPTION OF DRAWINGS

FIG. 1 is a schematic diagram of an application scenario of a network intention monitoring method according to an embodiment of this application;
FIG. 2 is an architectural diagram of a network intention monitoring method according to an embodiment of this application;
FIG. 3 is a flowchart of a network intention monitoring method according to an embodiment of this application;
FIG. 4A, FIG. 4B, and FIG. 4C are a flowchart of a network intention monitoring method according to an embodiment of this application;
FIG. 5 is a schematic diagram of an application scenario of a network intention monitoring method according to an embodiment of this application;
FIG. 6 is a schematic diagram of an application scenario of a network intention monitoring method according to an embodiment of this application;
FIG. 7 is an architectural diagram of a network intention monitoring system according to an embodiment of this application; and
FIG. 8 is a schematic diagram of a structure of a network intention monitoring system according to an embodiment of this application.

### DESCRIPTION OF EMBODIMENTS

To make the objectives, technical solutions, and advantages of this application clearer, the following further describes this application in detail with reference to the accompanying drawings. It is clear that the described embodiments are merely some rather than all of embodiments of this application.

Network architectures and service scenarios described in embodiments of this application are used as examples to describe the technical solutions of this application, but this does not mean that this application is applicable only to the following embodiments. A person of ordinary skill in the art may know that, with evolution of network architectures and emergence of new service scenarios, the technical solutions provided in this application are also applicable to a similar technical problem.

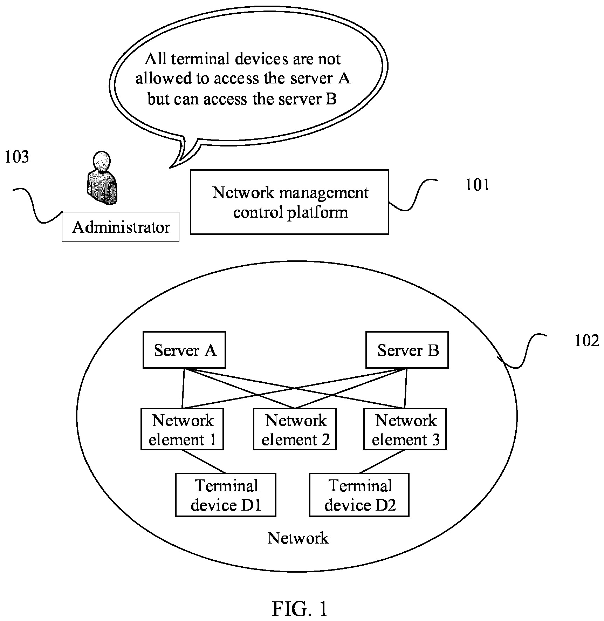

FIG. 1 is a schematic diagram of an application scenario of a network intention monitoring method according to an embodiment of this application. The network scenario includes a network management control platform 101, a network 102, and an administrator 103. In this network scenario, the administrator 103 is responsible for managing a network facility and operation and maintenance in the network 102 and ensuring normal operation of a network service in the network 102. Operation and maintenance management objects of the administrator 103 include the network management control platform 101 and the network 102. The network management control platform 101 supports delivering a network service configuration to the network 102 based on a network intention of a user. For example, the administrator 103 needs to implement a network intention "all terminal devices are not allowed to access a server A but can be allowed to access a server B". After the administrator 103 inputs the network intention in an input manner provided by the network management control platform 101, the network management control platform 101 converts the network intention into configuration information that can be identified by a network element device in the network 102, and delivers the configuration information to the network element device in the network 102. For example, a network element 1 to a network element 3 in the network 102 receive the configuration information sent by the network management control platform 101, and execute the configuration information. The administrator 103 may learn, through an interface of the network management control platform 101, that the network element device in the network 102 has completed configuration delivery, and the administrator 103 may perform manual testing to verify whether running statuses of the management control platform 101 and the network 102 satisfy the previously input network intention. For example, the administrator 103 discovers, through testing, that terminal devices D1 and D2 in the network 102 cannot access the server A but can access the server B. This means that a current network running status satisfies the expected network intention of the administrator 102. If the administrator 103 discovers, through testing, that the terminal device D1 in the network 102 can still access the server A, it means that a network running status does not satisfy the expected network intention of the administrator 102, and the network service is abnormal. For the foregoing network abnormality, the network administrator 103 needs to perform fault diagnosis by using an existing operation and maintenance technology and means. For example, the network administrator 103 checks whether the network management control platform 101 has successfully delivered a configuration to a related network element device in the network 102, whether a delivered configuration is correct, and whether the related network element in the network 102 has successfully executed the configuration. To improve network intention monitoring efficiency and avoid a related network fault, an embodiment of this application provides the following method.

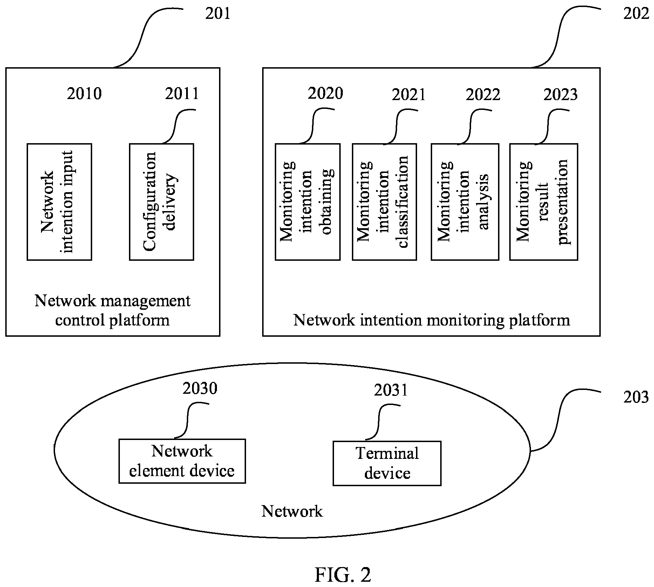

FIG. 2 is an architectural diagram of a network intention monitoring method according to an embodiment of this application. An architecture in the method in this embodiment of this application includes a network management control platform 201, a network intention monitoring platform 202, and a network 203. The network management control platform 201 is a platform that is based on a software defined networking (Software Defined Networking, SDN) technology and that is used for operation and maintenance management of a physical network element device and/or a terminal device in a network, provides an input page of a network intention for a user, converts an input network intention into executable configuration information, and delivers the executable configuration information to a network element device in the network 203. The network management control platform 201 includes a network intention input module 2010 and a configuration delivery module 2011. The network intention input module 2010 provides a network intention input interface for a user, converts the network intention into an executable policy, an indicator that can be quantitatively analyzed, and the like, and supports opening network intention information and/or converted information to a third-party system or platform through an application programming interface (Application Programming Interface, API). The configuration delivery module 2011 decomposes, into configuration information that may be executed by a network element device, the policy and the indicator that are obtained by the network intention input module 2010 through conversion. It is to be noted that the network management control platform 201 further includes other modules. However, because the other modules are irrelevant to the method in this application, the other modules are not described herein one by one, and only the network intention input module 2010 and the configuration delivery module 2011 that are related to the method in this application are described. The network intention monitoring platform 202 is responsible for monitoring some or all of network intentions, and monitoring is performed to check whether a current running status of the network 203 satisfies a network intention input by the user. The network intention monitoring platform 202 includes a monitoring intention obtaining module 2020, a monitoring intention classification module 2021, a monitoring intention analysis module 2022, and a monitoring result presentation module 2023. The monitoring intention obtaining module 2020 is mainly responsible for providing, on the network intention monitoring platform 202, an input interface of a network intention that needs to be monitored or synchronizing, from a third-party system or platform, a network intention that needs to be monitored. For example, the monitoring intention obtaining module 2020 synchronizes network intention information and/or converted information from the third-party system or platform through an API open interface. The monitoring intention classification module 2021 is responsible for classifying network intention information that needs to be monitored into a plurality of types of network intention sub-information according to a network intention classification principle. The monitoring intention analysis module 2022 is responsible for inputting the plurality of types of to-be-monitored network intention sub-information into corresponding analysis engines for monitoring and analysis, and inputting analysis results obtained by the plurality of analysis engines into a monitoring engine to obtain final monitoring result information through analysis. The monitoring result information provides a result of comparison with a network intention of the user. The monitoring result presentation module 2023 is responsible for presenting the monitoring result information and synchronizing the monitoring result information to a third-party system or platform through an API open interface. It is to be noted that, in some embodiments, functions of the network management control platform 201 and the network intention monitoring platform 202 may belong to a same system or platform.

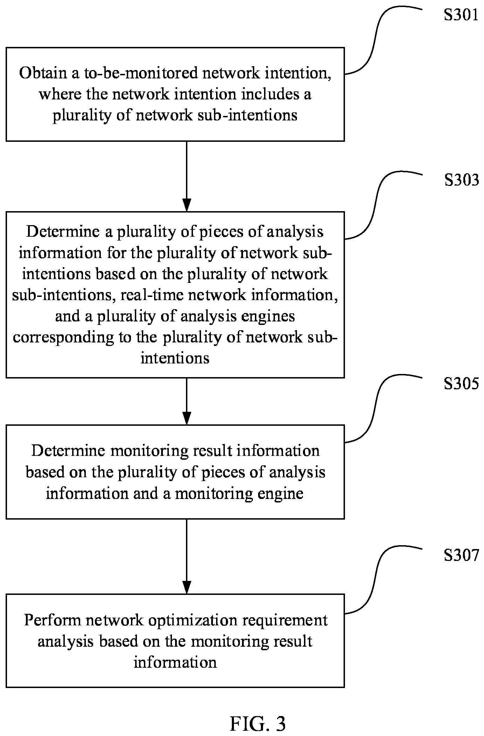

FIG. 3 is a flowchart of a network intention monitoring method according to an embodiment of this application. A specific method is as follows:
S301: Obtain a to-be-monitored network intention, where the network intention includes a plurality of network sub-intentions.

A monitoring intention obtaining module 2020 of a network intention monitoring platform 202 obtains the to-be-monitored network intention. The network intention refers to an expectation of a user of a network for a network device and function implementation, and mainly includes various network operations, for example, switching, routing, a service chain, security, quality of service, and compliance audit, and further includes one or more policies, settings, configurations, and the like defined for each network element device (for example, a switch, a router, a server, or a storage device). Based on dimensions of a configuration operation and a network function of a network element device in a network, a network intention may be classified into a plurality of network sub-intentions, including a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service KPI indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. For example, in FIG. 1, "all terminal devices can access each other and are allowed to access the server B, but are not allowed to access the server A" is a service reachability intention. A service quality of service network intention refers to an expectation of the user for quality of service and service experience of a service application in a network, and the quality of service and the service experience of the service application may be measured by using a service quality of service parameter indicator. The parameter indicator includes a network link packet loss rate and/or a network link packet loss rate threshold, a network link delay and/or a network link delay threshold, a network link jitter and/or a network link jitter threshold, a network link throughput and/or a network link throughput threshold, network bandwidth utilization and/or a network bandwidth utilization threshold, and/or a user experience indicator of the service application. Typical user experience indicators of service applications include a mean opinion score (Mean Opinion Score, MOS) value of an audio service application and a video mean opinion score (Video Mean Opinion Score, VMOS) value of a video service application. A security network intention refers to a security policy specified by the user for a network, including a policy for controlling mutual access between network services, a physical network partition isolation policy, a logical network isolation policy, a tenant isolation policy, and/or a service threat prevention policy. A compliance network intention refers to a requirement of the user for network compliance, compliance that satisfies an industry of the user, and a user-defined compliance requirement, for example, a payment card industry data security standard (Payment Card Industry Data Security Standard, PCI DSS) in the financial industry. An audit network intention refers to an audit requirement of the user for a network, for example, a computing resource usage audit and a network resource usage audit. A fault network intention refers to a requirement of the user for network fault analysis, for example, the user expects to perform analysis and provide alarms for a network device fault, a resource specification fault, and a network security fault.

A manner in which the monitoring intention obtaining module 2020 obtains the to-be-monitored network intention includes: 1. The network intention monitoring platform 202 provides an input page of a to-be-monitored network intention; and after operation and maintenance personnel inputs a network intention that needs to be monitored, the network intention monitoring platform 202 obtains the network intention. 2. The network intention monitoring platform 202 synchronizes a network intention of the user from the network management control platform 201 in FIG. 2 through an API open interface, and uses the network intention of the user as the to-be-monitored network intention.

After the monitoring intention obtaining module 2020 obtains the to-be-monitored network intention, a monitoring intention classification module 2021 may classify the network intention into a plurality of network sub-intentions based on dimensions of a network operation and a network function corresponding to the network intention. For example, the network intention of the operation and maintenance personnel is as follows: A terminal whose source Internet Protocol (Internet Protocol, IP) address is 172.40.1.0/24 can access a terminal whose destination IP address is 10.1.2.0/24, an access path needs to pass through a network element device 6, and it needs to be ensured that a packet loss rate is less than 1% and a delay is less than 10 milliseconds. Based on dimensions of a configuration operation and a network function of a network element device in a network, the network intention is classified into four network sub-intentions: 1. Service reachability sub-intention 1: The terminal whose source IP address network segment is 172.40.1.0/24 can access the terminal whose destination IP address network segment is 10.1.2.0/24. 2. Service reachability sub-intention 2: The access path needs to pass through the network element device 6. 3. Service quality of service sub-intention 1: A packet loss rate of a link between the terminal whose source IP address network segment is 172.40.1.0/24 and the terminal whose destination IP address network segment is 10.1.2.0/24 is less than 1%. 4. Service quality of service sub-intention 2: A delay of the link between the terminal whose source IP address network segment is 172.40.1.0/24 and the terminal whose destination IP address network segment is 10.1.2.0/24 is less than 10 milliseconds.

S303: Determine a plurality of pieces of analysis information for the plurality of network sub-intentions based on the plurality of network sub-intentions, real-time network information, and a plurality of analysis engines corresponding to the plurality of network sub-intentions.

A monitoring intention analysis module 2022 of the network intention monitoring platform 202 determines the plurality of pieces of analysis information for the plurality of network sub-intentions based on the plurality of network sub-intentions obtained in S301, the real-time network information, and the plurality of analysis engines corresponding to the plurality of network sub-intentions.

A function of an analysis engine is to analyze, based on real-time information of a current network, a policy and an indicator included in a type of network sub-intention, to obtain analysis information of the current network for the network sub-intention. Based on dimensions of a configuration operation and a network function of a network element device in a network, a network intention may be classified into a plurality of network sub-intentions. The plurality of network sub-intentions include a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service key performance indicator (Key Performance Indicator, KPI) indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. The real-time network information includes configuration information of a network element device in a network, network topology data, port status information of the network element device, forwarding information of the network element device, log and alarm information of the network element device, KPI data from the network element device in the network, and/or service flow statistics information. The forwarding information of the network device includes an Address Resolution Protocol (Address Resolution Protocol, ARP) entry, a Media Access Control (Media Access Control, MAC) entry, and/or a forwarding information table (Forwarding Information Table, FIB) entry The KPI data from the network element device in the network includes memory and computing resource information, packets received and sent through an interface of the network element device in the network, and/or packet loss statistics information. The service flow statistics information includes a data packet forwarding delay, packet loss statistics information, jitter information, and/or traffic statistics information. Service reachability sub-intention analysis information is determined based on the service reachability sub-intention, the real-time network information, and an analysis engine corresponding to the service reachability sub-intention; service quality of service sub-intention analysis information is determined based on the service quality of service sub-intention, the real-time network information, and an analysis engine corresponding to the service quality of service sub-intention; service security sub-intention analysis information is determined based on the service security sub-intention, the real-time network information, and an analysis engine corresponding to the service security sub-intention; service compliance sub-intention analysis information is determined based on the service compliance sub-intention, the real-time network information, and an analysis engine corresponding to the service compliance sub-intention; service audit sub-intention analysis information is determined based on the service audit sub-intention, the real-time network information, and an analysis engine corresponding to the service audit sub-intention; and/or service fault sub-intention analysis information is determined based on the service fault sub-intention, the real-time network information, and an analysis engine corresponding to the service fault sub-intention.

A function of the analysis engine corresponding to the service reachability sub-intention is to verify the basic connectivity of the network in which the service is located, the data forwarding path, and/or reachability of the logical network for user service provisioning that are/is in the service reachability sub-intention to obtain the service reachability sub-intention analysis information, and compare the service reachability sub-intention analysis information with the service reachability sub-intention to obtain a comparison result. The service reachability sub-intention analysis information includes analysis information of basic connectivity of a network in which a service is located and/or reachability of a logical network for user service provisioning that are/is in a to-be-monitored service reachability sub-intention. For example, the analysis information of the basic connectivity of the network in which the service is located includes reachability between quintuples/triplets/2-tuples of service IP addresses and/or information about a path between the service IP addresses that are/is to be monitored. The information about the path between the service IP addresses includes information about a path that can provide a normal forwarding capability and/or information about a device through which the forwarding path passes. For example, the analysis information of reachability of the logical network for user service provisioning includes information about layer 2 and/or layer 3 reachability in a virtual private cloud (Virtual Private Cloud, VPC), access information of an external network of a local area network, microsegmentation mutual access information, and/or policy-based routing traffic diversion information. For example, if the network intention of the operation and maintenance personnel is that the terminal whose source IP address is 172.40.1.0/24 can access the terminal whose destination IP address is 10.1.2.0/24, a to-be-monitored network intention is that 2-tuples of the service source IP address network segment 172.40.1.0/24 and the service destination IP address network segment 10.1.2.0/24 are reachable to each other. The monitoring intention analysis module 2022 synchronizes, from the network element device in the network and/or the network management control platform 201, the real-time network information, for example, network topology data, port status information of the network element device, and forwarding information of the network element device. The forwarding information of the network device includes an ARP entry, a MAC entry, and/or a FIB entry. The analysis engine corresponding to the service reachability sub-intention uses the real-time network information and the to-be-monitored network intention as an input, and outputs the service reachability sub-intention analysis information and a comparison result by using an analysis function of the analysis engine. For example, a to-be-monitored service reachability sub-intention is that the 2-tuples of the service source IP address network segment 172.40.1.0/24 and the service destination IP address network segment 10.1.2.0/24 are reachable to each other, and service reachability sub-intention analysis information is that the 2-tuples of the service source IP address network segment 172.40.1.0/24 and the service destination IP address network segment 10.1.2.0/24 are reachable to each other. In this case, a comparison result is that the analysis information satisfies the to-be-monitored service reachability sub-intention. For example, a to-be-monitored service reachability sub-intention is that the 2-tuples of the service source IP address network segment 172.40.1.0/24 and the service destination IP address network segment 10.1.2.0/24 are reachable to each other, and service reachability sub-intention analysis information is that the 2-tuples of the service source IP address network segment 172.40.1.0/24 and the service destination IP address network segment 10.1.2.0/24 are not reachable to each other. In this case, a comparison result is that the analysis information does not satisfy the to-be-monitored service reachability sub-intention.

A function of the analysis engine corresponding to the service quality of service sub-intention is to verify service quality of service KPI information in the service quality of service sub-intention to obtain the service quality of service sub-intention analysis information, and compare the service quality of service analysis information with the service quality of service sub-intention to obtain a comparison result. The service quality of service sub-intention analysis information includes a network link packet loss rate, a network link delay, a network link jitter, a network link throughput, network bandwidth utilization, and/or a user experience indicator of a service application. For example, if a service quality of service sub-intention of the operation and maintenance personnel is that a packet loss rate of a link between the source IP address network segment 172.40.1.0/24 and the destination IP address network segment 10.1.2.0/24 is less than 1%, a to-be-monitored service quality of service sub-intention is that the packet loss rate of the link between the source IP address network segment 172.40.1.0/24 and the destination IP address network segment 10.1.2.0/24 is less than 1%. The monitoring intention analysis module 2022 synchronizes, from the network element device in the network and/or the network management control platform 201, the real-time network information, for example, KPI data reported by the network element device in the network (memory and computing resource information, packets received and sent through an interface of the network element device in the network, and packet loss statistics information), and/or service flow statistics information (a data packet forwarding delay, packet loss statistics information, jitter information, and traffic statistics information). The analysis engine corresponding to the service quality of service sub-intention uses the real-time network information and the to-be-monitored service quality of service sub-intention as an input, and outputs the service quality of service sub-intention analysis information and a comparison result by using an analysis function of the analysis engine. For example, a to-be-monitored service quality of service sub-intention is that the packet loss rate of the link between the source IP address network segment 172.40.1.0/24 and the destination IP address network segment 10.1.2.0/24 is less than 1%, and service quality of service sub-intention analysis information is that an average packet loss rate within one minute is 0.5%. In this case, a comparison result is that the service quality of service sub-intention analysis information satisfies the to-be-monitored service quality of service sub-intention. For example, a to-be-monitored service quality of service sub-intention is that the packet loss rate of the link between the source IP address network segment 172.40.1.0/24 and the destination IP address network segment 10.1.2.0/24 is less than 1%, and service quality of service sub-intention analysis information is that an average packet loss rate within one minute is 2%. In this case, a comparison result is that the service quality of service sub-intention analysis information does not satisfy the to-be-monitored service quality of service sub-intention.

A function of the analysis engine corresponding to the service security sub-intention is to verify security isolation, a security protection policy, and a configuration in the service security sub-intention to obtain the service security sub-intention analysis information, and compare the service security sub-intention analysis information with the security sub-intention to obtain a comparison result. The security sub-intention analysis information includes a capability of mutual access between network services, a capability of mutual access of service data between physical network partitions, a logical network isolation status, a tenant isolation status, and/or effectiveness information of a service threat prevention policy. For example, if a service security sub-intention of the operation and maintenance personnel is that advanced security access authentication, for example, 802.1X authentication, needs to be performed on the terminal whose source IP address network segment is 172.40.1.0/24, a to-be-monitored service quality of service sub-intention is that an access authentication network element device of the terminal whose IP address network segment is 172.40.1.0/24 makes a configuration of 802.1X advanced security access authentication become effective. The monitoring intention analysis module 2022 synchronizes, from the network element device in the network and/or the network management control platform 201, the real-time network information, for example, configuration information of the network element device in the network. The analysis engine corresponding to the service security sub-intention uses the real-time network information and the to-be-monitored service security sub-intention as an input, and outputs the service security sub-intention analysis information and a comparison result by using an analysis function of the analysis engine. The service security sub-intention analysis information includes: for example, a to-be-monitored service quality of service sub-intention is that the access authentication network element device of the terminal whose IP address network segment is 172.40.1.0/24 makes the configuration of 802.1X advanced security access authentication become effective. If the service security sub-intention analysis information is that the access authentication network element device of the terminal whose IP address network segment is 172.40.1.0/24 makes the configuration of 802.1X advanced security access authentication become effective, a comparison result is that the service security sub-intention analysis information satisfies the service security sub-intention. For example, a to-be-monitored service quality of service sub-intention is that the access authentication network element device of the terminal whose IP address network segment is 172.40.1.0/24 makes the configuration of 802.1X advanced security access authentication become effective. If the service security sub-intention analysis information is that the access authentication network element device of the terminal whose IP address network segment is 172.40.1.0/24 does not make the configuration of 802.1X advanced security access authentication become effective, a comparison result is that the service security sub-intention analysis information does not satisfy the service security sub-intention.

A function of the analysis engine corresponding to the service compliance sub-intention is to verify a policy and a configuration that are in the service compliance sub-intention and that are related to a compliance specification, to obtain the service compliance sub-intention analysis information; and compare the service compliance sub-intention analysis information with the service compliance sub-intention to obtain a comparison result. The compliance sub-intention analysis information includes compliance specific to an industry of the user and a user-defined compliance requirement, for example, compliance information of a service on-line location, compliance information of service isolation, and compliance information of service configuration. For example, if a service compliance sub-intention of the operation and maintenance personnel is that a password of an administrator account of the network element device in the network needs to be modified once every three months, a to-be-monitored service compliance sub-intention is that a modification interval set for the password of the administrator account of the network element device in the network is three months. The monitoring intention analysis module 2022 synchronizes, from the network element device in the network and/or the network management control platform 201, the real-time network information, for example, configuration information of the network element device in the network. The analysis engine corresponding to the service compliance sub-intention uses the real-time network information and the to-be-monitored service compliance sub-intention as an input, and outputs the service compliance sub-intention analysis information and a comparison result by using an analysis function of the analysis engine. For example, a to-be-monitored service compliance sub-intention is that the modification interval set for the password of the administrator account of the network element device in the network is three months, and service compliance sub-intention analysis information is that the modification interval set for the password of the administrator account of the network element device in the network is two months. In this case, a comparison result is that the service compliance sub-intention analysis information satisfies the service compliance sub-intention. For example, a to-be-monitored service compliance sub-intention is that the modification interval set for the password of the administrator account of the network element device in the network is three months, and service compliance sub-intention analysis information is that a modification time set for the password of the administrator account is not configured in the network element device in the network. In this case, a comparison result is that the service compliance sub-intention analysis information does not satisfy the service compliance sub-intention.

A function of the analysis engine corresponding to the service audit sub-intention is to verify a policy and a configuration that are in the service audit sub-intention and that are related to an audit requirement, to obtain the service audit sub-intention analysis information; and compare the service audit sub-intention analysis information with the service audit sub-intention to obtain a comparison result. The audit sub-intention analysis information includes a computing resource usage audit and a network resource usage audit. For example, if the service audit sub-intention of the operation and maintenance personnel is to audit computing resource usage of a server and provide an audit report every month, a to-be-monitored service audit sub-intention is to provide the audit report of the computing resource usage of the server every month. The monitoring intention analysis module 2022 synchronizes, from the network element device in the network and/or the network management control platform 201, the real-time network information, for example, a resource audit report of the network management controller platform and an audit log of the network element device in the network. The analysis engine corresponding to the service audit sub-intention uses the real-time network information and the to-be-monitored service audit sub-intention as an input, and outputs the service audit sub-intention analysis information and a comparison result by using an analysis function of the analysis engine. For example, a to-be-monitored service audit sub-intention is to provide an audit report of computing resource usage of a server every month, and service audit sub-intention analysis information is that the audit report of the computing resource usage of the server may be provided every month. In this case, a comparison result is that the service audit sub-intention analysis information satisfies the service audit sub-intention. For example, a to-be-monitored service audit sub-intention is to provide the audit report of the computing resource usage of the server every month, and service audit sub-intention analysis information is that the audit report of the computing resource usage of the server may be provided every three months. In this case, a comparison result is that the service audit sub-intention analysis information does not satisfy the service audit sub-intention.

A function of the analysis engine corresponding to the service fault sub-intention is to obtain network fault information and fault analysis information that are related to the to-be-monitored network intention. The fault sub-intention analysis information includes the network fault information and the fault analysis information that are related to the to-be-monitored network intention. For example, if the service fault sub-intention of the operation and maintenance personnel is to focus on an access fault in the terminal whose IP address network segment is 172.40.1.0/24, the to-be-monitored service fault sub-intention is to obtain fault information and fault analysis information that are related to access of the terminal whose IP address network segment is 172.40.1.0/24. The monitoring intention analysis module 2022 synchronizes, from the network element device in the network and/or the network management control platform 201, the real-time network information, for example, log and alarm information of the network element device, configuration information of the network element device, forwarding information of the network element device, KPI data reported by the network element device in the network (memory and computing resource information, packets received and sent through an interface of the network element device in the network, and packet loss statistics information), and/or service flow statistics information (a data packet forwarding delay, packet loss statistics information, jitter information, and traffic statistics information). The analysis engine corresponding to the service fault sub-intention uses the real-time network information and the to-be-monitored service fault sub-intention as an input, and outputs the service fault sub-intention analysis information and a comparison result by using an analysis function of the analysis engine. For example, a to-be-monitored service fault sub-intention is to obtain the fault information and the fault analysis information that are related to access of the terminal whose IP address network segment is 172.40.1.0/24, and fault sub-intention analysis information provides a fault information list and a fault analysis information list that are related to access of the terminal whose IP address network segment is 172.40.1.0/24. In this case, a comparison result is that the service fault sub-intention analysis information satisfies the service fault sub-intention. For example, a to-be-monitored service fault sub-intention is to obtain the fault information and the fault analysis information that are related to access of the terminal whose IP address network segment is 172.40.1.0/24, and fault sub-intention analysis information provides a fault information list and a fault analysis information list that are related to access of the terminal whose IP address network segment is 172.40.1.0/24. In this case, a comparison result is that the service fault sub-intention analysis information satisfies the service fault sub-intention.

S305: Determine monitoring result information based on the plurality of pieces of analysis information and a monitoring engine.

The monitoring intention analysis module 2022 determines the monitoring result information based on the plurality of pieces of analysis information obtained in S303 and the monitoring engine. The monitoring engine may determine the monitoring result information based on a comparison result corresponding to each of the plurality of pieces of analysis information. For example, the network intention of the operation and maintenance personnel includes the service reachability sub-intention and the service security sub-intention. In S303, the monitoring intention analysis module 2022 obtains service reachability sub-intention analysis information and a comparison result, and service security sub-intention analysis information and a comparison result. For example, the comparison result corresponding to the service reachability sub-intention satisfies the service reachability sub-intention, and the comparison result corresponding to the service security sub-intention satisfies the service security sub-intention. In some embodiments, the monitoring engine performs determining based on whether each piece of analysis information and a comparison result satisfy a corresponding network sub-intention. When each comparison result satisfies a corresponding network sub-intention, the monitoring result information is that the to-be-monitored network intention satisfies an expectation of the user for the network intention. If one comparison result does not satisfy a corresponding network sub-intention, the monitoring result information is that the to-be-monitored network intention does not satisfy the expectation of the user for the network intention. For example, the network intention of the operation and maintenance personnel includes the service reachability sub-intention and the service security sub-intention. In S303, the monitoring intention analysis module 2022 obtains service reachability sub-intention analysis information and a comparison result, and service security sub-intention analysis information and a comparison result. For example, the comparison result corresponding to the service reachability sub-intention satisfies the service reachability sub-intention, and the comparison result corresponding to the service security sub-intention does not satisfy the service security sub-intention. After analysis is performed by the monitoring engine, the monitoring result information is that the to-be-monitored network intention does not satisfy the expectation of the user for the network intention.

In some embodiments, the monitoring engine may assign different weights to all types of analysis information and all types of comparison results based on a health degree evaluation model to obtain scores of all the types of comparison results, and summarize the scores of all the types of comparison results to obtain a total score. For example, a full score of the health degree evaluation model is 100 points. The operation and maintenance personnel may assign 100 points to all types of comparison results based on a network characteristic and an operation and maintenance habit. Full scores of all the types of comparison results need to be 100 points through summarization. A full score of the comparison result corresponding to the service reachability sub-intention is 20 points, a full score of the comparison result corresponding to the service quality of service sub-intention is 20 points, a full score of the comparison result corresponding to the service security sub-intention is 20 points, a full score of the comparison result corresponding to the service compliance sub-intention is 10 points, a full score of the comparison result corresponding to the service audit sub-intention is 10 points, a full score of the comparison result corresponding to the service fault sub-intention is 20 points, and a score of each type of comparison result that does not satisfy a network sub-intention is 0 points. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user.

S307: Perform network optimization requirement analysis based on the monitoring result information.

In some embodiments, the monitoring engine obtains the monitoring result information based on a health degree evaluation model, and the monitoring result information is obtained through summarization based on a score of a comparison result obtained by an analysis engine corresponding to each type of sub-intention. For example, a case in which a total score in the monitoring result information is greater than 80 points indicates a good state, indicating that a current network running status satisfies a network intention of the user and the network running status does not need to be optimized; and a case in which the total score is less than 80 points indicates an abnormal state, indicating that the current network running status does not satisfy a network intention of the user and optimization or repairing is to be performed based on a policy and an indicator corresponding to an item whose score is abnormal. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user. The comparison results corresponding to the service quality of service sub-intention and the service compliance sub-intention are items whose scores are abnormal, and network optimization needs to be performed on policies and indicators corresponding to the service quality of service sub-intention and the service compliance sub-intention.

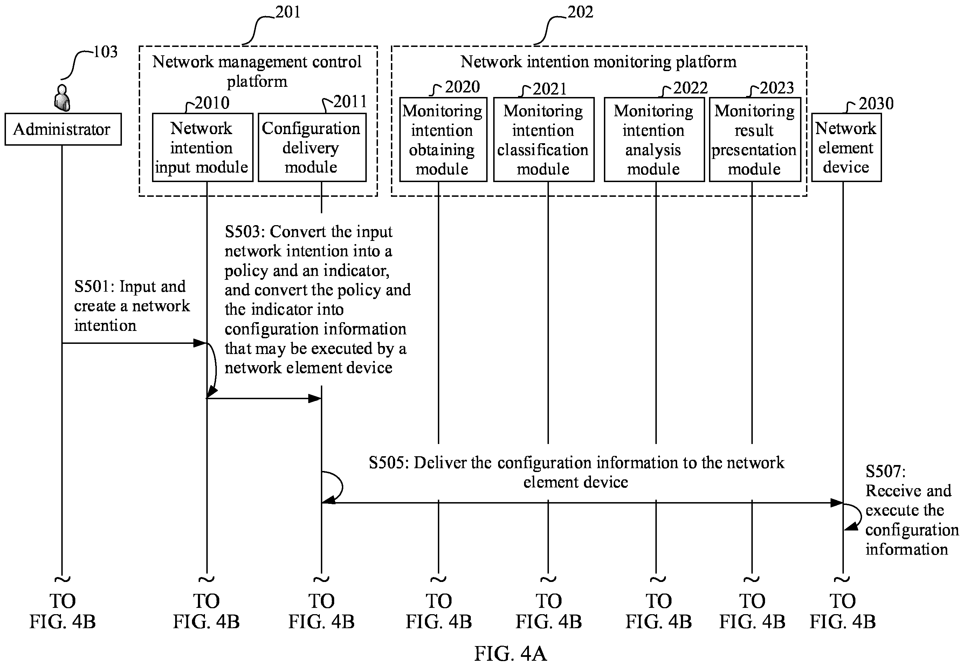

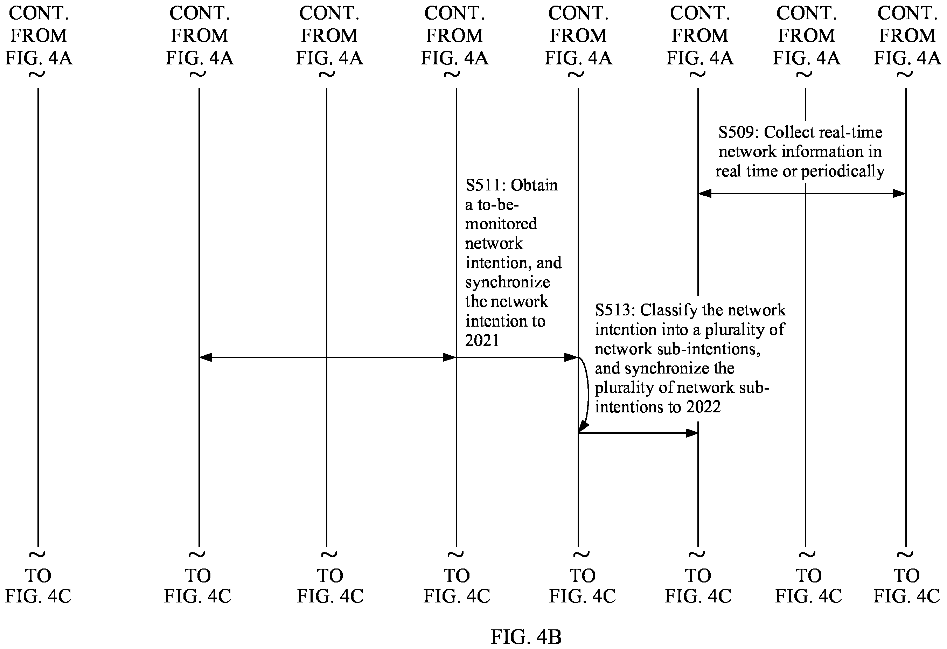

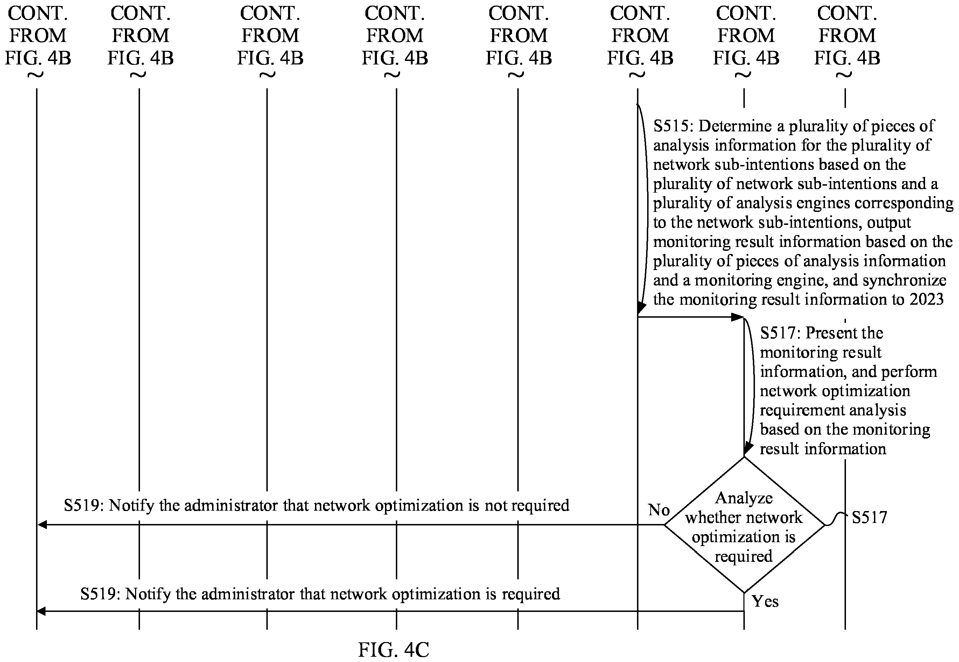

FIG. 4A, FIG. 4B, and FIG. 4C are a flowchart of a network intention monitoring method according to an embodiment of this application. A specific method is as follows:
S501: Input and create a network intention.

An administrator 103 inputs, on a network intention input and creation interface of a network management control platform 201, a network intention that is expected to be created.

S503: Convert the input network intention into a policy and an indicator, and convert the policy and the indicator into configuration information that may be executed by a network element device.

A network intention input module 2010 of the network management control platform 201 converts the input network intention into the policy and the indicator, and converts the policy and the indicator into the configuration information that may be executed by the network element device. The network intention input module 2010 synchronizes, to a configuration delivery module 2011, the configuration information that may be executed by the network element device.

S505: Deliver the configuration information to the network element device.

The configuration delivery module 2011 of the network management control platform 201 delivers the configuration information to the network element device. S507: Receive and execute the configuration information.

A network element device 2030 receives and executes the configuration information. Based on S501 to S507, a procedure of inputting the network intention by the administrator and executing the configuration information is completed. Subsequent operations in the method are monitoring and analyzing a network running status, and determining whether the network running status satisfies the network intention of the administrator.

S509: Collect real-time network information in real time or periodically.

A monitoring intention analysis module 2022 of a network intention monitoring platform 202 collects real-time network information in real time or periodically. In some embodiments, the monitoring intention analysis module 2022 may synchronize the real-time network information from a plurality of network element devices in a network and/or the network management control platform 201. The real-time network information includes configuration information of a network element device in a network, network topology data, port status information of the network element device, forwarding information of the network element device, log and alarm information of the network element device, KPI data from the network element device in the network, and/or service flow statistics information. The forwarding information of the network device includes an ARP entry, a MAC entry, and/or a FIB entry The KPI data from the network element device in the network includes memory and computing resource information, packets received and sent through an interface of the network element device in the network, and/or packet loss statistics information. The service flow statistics information includes a data packet forwarding delay, packet loss statistics information, jitter information, and/or traffic statistics information.

S511: Obtain a to-be-monitored network intention, and synchronize the network intention to 2021.

A monitoring intention obtaining module 2020 of the network intention monitoring platform 202 obtains the to-be-monitored network intention, and synchronizes the network intention to 2021. A manner in which the monitoring intention obtaining module 2020 obtains the to-be-monitored network intention is as follows: 1. The network intention monitoring platform 202 provides an input interface of a to-be-monitored network intention, and operation and maintenance personnel may input or select, on the interface, a network intention that needs to be monitored. 2. The network intention input in S501 is synchronized from the network management control platform 201, and the network intention is used as the to-be-monitored network intention.

S513: Classify the network intention into a plurality of network sub-intentions, and synchronize the plurality of network sub-intentions to 2022.

The monitoring intention classification module 2021 of the network intention monitoring platform 202 classifies the network intention into a plurality of network sub-intentions, and synchronizes the plurality of network sub-intentions to 2022. Based on dimensions of a configuration operation and a network function of a network element device in a network, a network intention may be classified into a plurality of network sub-intentions. The plurality of network sub-intentions include a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service KPI indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. For example, the network intention of the operation and maintenance personnel is as follows: A terminal whose source IP address network segment is 172.40.1.0/24 can access a terminal whose destination IP address network segment is 10.1.2.0/24, an access path needs to pass through a network element device 6, and it needs to be ensured that a packet loss rate is less than 1% and a delay is less than 10 milliseconds. The network intention may be classified into the following network sub-intentions: 1. Service reachability sub-intention 1: The terminal whose source IP address network segment is 172.40.1.0/24 can access the terminal whose destination IP address network segment is 10.1.2.0/24. 2. Service reachability sub-intention 2: The access path needs to pass through the network element device 6. 3. Service quality of service sub-intention 1: A packet loss rate of a link between the terminal whose source IP address network segment is 172.40.1.0/24 and the terminal whose destination IP address network segment is 10.1.2.0/24 is less than 1%. 4. Service quality of service sub-intention 2: A delay of the link between the terminal whose source IP address network segment is 172.40.1.0/24 and the terminal whose destination IP address network segment is 10.1.2.0/24 is less than 10 milliseconds.

S515: Determine a plurality of pieces of analysis information for the plurality of network sub-intentions based on the plurality of network sub-intentions and a plurality of analysis engines corresponding to the network sub-intentions, output monitoring result information based on the plurality of pieces of analysis information and a monitoring engine, and synchronize the monitoring result information to 2023.

The monitoring intention analysis module of the network intention monitoring platform 202 determines service reachability sub-intention analysis information based on the service reachability sub-intention, the real-time network information, and an analysis engine corresponding to the service reachability sub-intention; determines service quality of service sub-intention analysis information based on the service quality of service sub-intention, the real-time network information, and an analysis engine corresponding to the service quality of service sub-intention; determines service security sub-intention analysis information based on the service security sub-intention, the real-time network information, and an analysis engine corresponding to the service security sub-intention; determines service compliance sub-intention analysis information based on the service compliance sub-intention, the real-time network information, and an analysis engine corresponding to the service compliance sub-intention; determines service audit sub-intention analysis information based on the service audit sub-intention, the real-time network information, and an analysis engine corresponding to the service audit sub-intention; and/or determines service fault sub-intention analysis information based on the service fault sub-intention, the real-time network information, and an analysis engine corresponding to the service fault sub-intention.

The monitoring intention analysis module 2022 determines the monitoring result information based on the obtained plurality of pieces of analysis information and the monitoring engine. The monitoring engine may determine the monitoring result information based on a comparison result corresponding to each of the plurality of pieces of analysis information. In some embodiments, the monitoring engine may assign different weights to all types of analysis information and all types of comparison results based on a health degree evaluation model to obtain scores of all the types of comparison results, and summarize the scores of all the types of comparison results to obtain a total score. For example, a full score of the health degree evaluation model is 100 points. The operation and maintenance personnel may assign 100 points to all types of comparison results based on a network characteristic and an operation and maintenance habit. Full scores of all the types of comparison results need to be 100 points through summarization. A full score of the comparison result corresponding to the service reachability sub-intention is 20 points, a full score of the comparison result corresponding to the service quality of service sub-intention is 20 points, a full score of the comparison result corresponding to the service security sub-intention is 20 points, a full score of the comparison result corresponding to the service compliance sub-intention is 10 points, a full score of the comparison result corresponding to the service audit sub-intention is 10 points, a full score of the comparison result corresponding to the service fault sub-intention is 20 points, and a score of each type of comparison result that does not satisfy a network sub-intention is 0 points. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user.

S517: Present the monitoring result information, and perform network optimization requirement analysis based on the monitoring result information.

The monitoring result presentation module 2023 of the network intention monitoring platform 202 is responsible for presenting the monitoring result information and performing network optimization requirement analysis based on the monitoring result information.

In some embodiments, the monitoring engine obtains the monitoring result information based on a health degree evaluation model, and the monitoring result information is obtained through summarization based on a score of a comparison result obtained by an analysis engine corresponding to each type of sub-intention. The monitoring result information may be presented in a form of a health degree. For example, a case in which a total score in the monitoring result information is greater than 80 points indicates a good state, indicating that a current network running status satisfies a network intention of the user and the network running status does not need to be optimized; and a case in which the total score is less than 80 points indicates an abnormal state, indicating that the current network running status does not satisfy a network intention of the user and optimization or repairing is to be performed based on a policy and an indicator corresponding to an item whose score is abnormal. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user. The comparison results corresponding to the service quality of service sub-intention and the service compliance sub-intention are items whose scores are abnormal, and network optimization needs to be performed on policies and indicators corresponding to the service quality of service sub-intention and the service compliance sub-intention.

S519: If a result of the network optimization requirement analysis is that network optimization is required, notify the administrator that network optimization is required; or if a result of the network optimization requirement analysis is that network optimization is not required, notify the administrator that network optimization is not required.

The monitoring result presentation module 2023 of the network intention monitoring platform 202 performs network optimization requirement analysis based on the monitoring result information; and if a result of the network optimization requirement analysis is that network optimization is required, notifies the administrator that network optimization is required; or if a result of the network optimization requirement analysis is that network optimization is not required, notifies the administrator that network optimization is not required.

In some embodiments, if a network running status satisfies a network intention of the user, a result of the network optimization requirement analysis is that network optimization is not required. In this case, the administrator is notified that network optimization is not required. If a network running status does not satisfy a network intention of the user, a result of the network optimization requirement analysis is that network optimization is required. In this case, the administrator is notified that network optimization is required. A network optimization object needs to be based on a policy and an indicator corresponding to a network sub-intention that does not satisfy a network intention of the user. The administrator may perform manual optimization or perform an optimization operation by using a network optimization tool or system. The network optimization part does not belong to the method and technology of this application, and is not described herein.

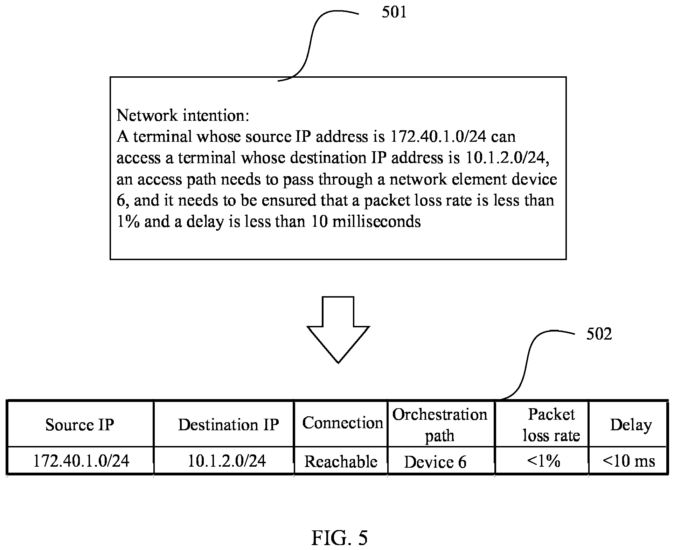

FIG. 5 is a schematic diagram of an application scenario of a network intention monitoring method according to an embodiment of this application. With reference to the application scenario shown in FIG. 5, a specific method is as follows:
According to the operation in S501 in FIG. 4A, an administrator 103 inputs a network intention 501 in FIG. 5 into a network management control platform 201. The network intention is as follows: A terminal whose source IP address is 172.40.1.0/24 can access a terminal whose destination IP address is 10.1.2.0/24, an access path needs to pass through a network element device 6, and it needs to be ensured that a packet loss rate is less than 1% and a delay is less than 10 milliseconds.

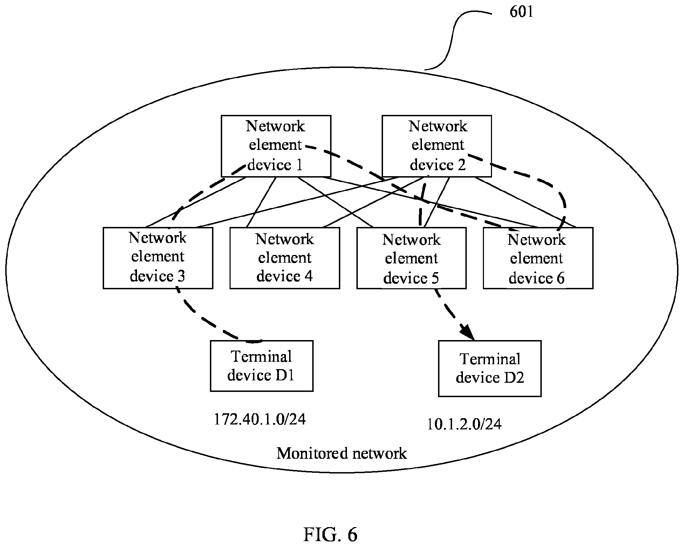

According to the operation in S503 in FIG. 4A, a network intention input module 2010 of a network management control platform 201 converts the network intention into a policy and an indicator 502 in FIG. 5: 1. The policy is as follows: A policy for connection between the source IP address network segment 172.40.1.0/24 and the destination IP address network segment 10.1.2.0/24 is "reachable"; and data of access from the source IP address network segment 172.40.1.0/24 to the destination IP address network segment 10.1.2.0/24 needs to pass through the device 6. 2. The indicator is as follows: A packet loss rate of a link between the source IP address network segment 172.40.1.0/24 and the destination IP address network segment 10.1.2.0/24 is less than 1%, and a delay of the link between the source IP address network segment 172.40.1.0/24 and the destination IP address network segment 10.1.2.0/24 is less than 10 milliseconds. The network intention input module 2010 converts the policy and the indicator into configuration information that may be executed by a network element device: A routing policy and a QoS (Quality of Service, quality of service) policy are configured on a network element device 1, a network element device 2, a network element device 3, a network element device 5, and the network element device 6. A black dashed line in FIG. 6 represents a route forwarding status, described based on the network intention in FIG. 5, of a data packet in a network element device when a terminal device D1 whose IP address network segment is 172.40.1.0/24 accesses a terminal device D2 whose destination IP address network segment is 10.1.2.0/24. The route forwarding status includes the following network intention information: A policy for connection between the source IP address network segment 172.40.1.0/24 and the destination IP address network segment 10.1.2.0/24 is "reachable"; and data of access from the source IP address network segment 172.40.1.0/24 to the destination IP address network segment 10.1.2.0/24 needs to pass through the device 6. According to the operation in S505 in FIG. 4A, a configuration delivery module 2011 of the network management control platform 201 delivers the configuration information to a related network element device. According to the operation in S507 in FIG. 4A, the network element device receives and executes the configuration information.

According to the operation in S509 in FIG. 4B, a monitoring intention analysis module 2022 of a network intention monitoring platform 202 collects real-time network information in real time or periodically. In this embodiment, the monitoring intention analysis module 2022 synchronizes the real-time network information from the network element device 1 to the network element device 6 in the network and the network management control platform 201. The real-time network information includes configuration information of a network element device in a network, network topology data, port status information of the network element device, forwarding information of the network element device, log and alarm information of the network element device, KPI data from the network element device in the network, and/or service flow statistics information. The forwarding information of the network device includes an ARP (Address Resolution Protocol, Address Resolution Protocol) entry, a MAC (Media Access Control, Media Access Control) entry, and/or a FIB (Forwarding Information Table, forwarding information table) entry. The KPI data from the network element device in the network includes memory and computing resource information, packets received and sent through an interface of the network element device in the network, and/or packet loss statistics information. The service flow statistics information includes a data packet forwarding delay, packet loss statistics information, jitter information, and/or traffic statistics information.

According to the operation in S511 in FIG. 4B, a monitoring intention obtaining module 2020 of the network intention monitoring platform 202 obtains a to-be-monitored network intention and synchronizes the network intention to a monitoring intention classification module 2021. In this embodiment, the monitoring intention obtaining module 2020 synchronizes, from the network management control platform 201 through an API open interface, the network intention input by the administrator in S501. The monitoring intention obtaining module 2020 provides a page for configuring a to-be-monitored network intention, and operation and maintenance personnel may select a network intention that needs to be monitored. For example, the operation and maintenance personnel choose to monitor the following network intention: 1. A terminal whose source IP address network segment is 172.40.1.0/24 and a terminal whose destination IP address network segment is 10.1.2.0/24. 2 are reachable to each other. The packet loss rate of the link between the source IP address segment 172.40.1.0/24 and the destination IP address network segment 10.1.2.0/24 is less than 1%.

According to the operation in S513 in FIG. 4B, the monitoring intention classification module 2021 of the network intention monitoring platform 202 classifies the obtained to-be-monitored network intention into a plurality of network sub-intentions, and synchronizes the plurality of network sub-intentions to the monitoring intention analysis module 2022. In this embodiment, the monitoring intention classification module 202 classifies the to-be-monitored network intention into two network sub-intentions: 1. Service reachability sub-intention: The terminal whose source IP address network segment is 172.40.1.0/24 and the terminal whose destination IP address network segment is 10.1.2.0/24. 2 are reachable to each other. Service quality of service sub-intention: The packet loss rate of the link between the source IP address segment 172.40.1.0/24 and the destination IP address network segment 10.1.2.0/24 is less than 1%.

According to the operation in S515 in FIG. 4C, the monitoring intention analysis module 2022 of the network intention monitoring platform 202 determines a plurality of pieces of analysis information for the plurality of network sub-intentions based on the plurality of network sub-intentions and a plurality of analysis engines corresponding to the network sub-intentions, outputs monitoring result information based on the plurality of pieces of analysis information and a monitoring engine, and synchronizes the monitoring result information to a monitoring result presentation module 2023. In this embodiment, a DPV (Data Plane Verification, data plane verification) simulation verification engine is used for the service reachability sub-intention. The DPV simulation verification engine obtains DPV analysis information and a comparison result based on real-time network information obtained in S509 and the to-be-monitored service reachability sub-intention. The DPV analysis information includes verification information of reachability between 2-tuples of the source IP address network segment and the destination IP address network segment in the service reachability sub-intention. For example, through analysis performed by the DPV simulation verification engine, the reachability verification information is that the terminal whose source IP address network segment is 172.40.1.0/24 and the terminal whose destination IP address network segment is 10.1.2.0/24 are reachable to each other. The reachability verification information is compared with the to-be-monitored service reachability sub-intention, and an obtained comparison result satisfies the service reachability sub-intention. In this embodiment, a data analysis engine is used for the service quality of service sub-intention. The data analysis engine obtains analysis information of a link packet loss rate and a comparison result based on the real-time network information obtained in S509 and the to-be-monitored service quality of service sub-intention. For example, through analysis performed by the data analysis engine, the analysis information of the link packet loss rate is that an average packet loss rate of the link between the source IP address segment 172.40.1.0/24 and the destination IP address network segment 10.1.2.0/24 in five minutes is 2%. The analysis information of the link packet loss rate is compared with the to-be-monitored service quality of service sub-intention, and an obtained comparison result does not satisfy the service quality of service sub-intention. Therefore, two pieces of analysis information are obtained after analysis performed by the two analysis engines.

Monitoring result information is output based on the two pieces of analysis information and the monitoring engine. The monitoring engine obtains the monitoring result information based on a health degree evaluation model, and the monitoring result information is obtained through summarization based on a score of a comparison result obtained by an analysis engine corresponding to each type of sub-intention. The monitoring result information may be presented in a form of a health degree. A case in which a total score in the monitoring result information is greater than 80 points indicates a good state, indicating that a current network running status satisfies a network intention of the user and the network running status does not need to be optimized; and a case in which the total score is less than 80 points indicates an abnormal state, indicating that the current network running status does not satisfy a network intention of the user and optimization or repairing is to be performed based on a policy and an indicator corresponding to an item whose score is abnormal. In this embodiment, the two network sub-intentions are analyzed. If a comparison result corresponding to each network sub-intention satisfies a network intention of the user, a full score of 50 points is given to the comparison result. If the comparison result does not satisfy the network intention of the user, a score of 0 points is given to the comparison result. In this case, a score of the comparison result corresponding to the service reachability sub-intention is 50 points, a score of the comparison result corresponding to the service quality of service sub-intention is 0 points, and a total score is 50 points.

According to the operation in S517 in FIG. 4C, the monitoring result presentation module 2022 of the network intention monitoring platform 202 presents the monitoring result information, and performs network optimization requirement analysis based on the monitoring result information. In this embodiment, a monitoring result is presented based on the health degree evaluation model. A case in which a total score in the monitoring result information is greater than 80 points indicates a good state, indicating that a current network running status satisfies a network intention of the user and the network running status does not need to be optimized; and a case in which the total score is less than 80 points indicates an abnormal state, indicating that the current network running status does not satisfy a network intention of the user and optimization or repairing is to be performed based on a policy and an indicator corresponding to an item whose score is abnormal. In this embodiment, a score of the comparison result corresponding to the service reachability sub-intention is 50 points, a score of the comparison result corresponding to the service quality of service sub-intention is 0 points, and a total score is 50 points. This indicates that a network running status does not satisfy a network intention of the user. The comparison result corresponding to the service quality of service sub-intention is an item whose score is abnormal. Network optimization needs to be performed based on a policy and an indicator in the service quality of service sub-intention. The administrator is notified of a network optimization analysis suggestion on an interface of the monitoring result presentation module 2022 by using an alarm or by sending an email.

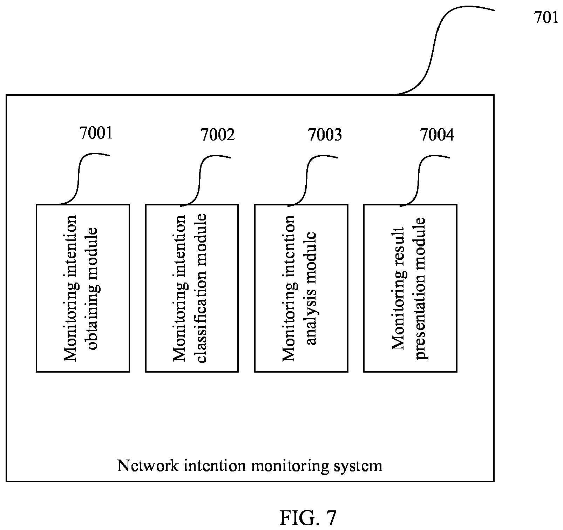

FIG. 7 is an architectural diagram of a network intention monitoring system 701 according to an embodiment of this application. The system is applied to a network scenario in which network intention monitoring is performed. As shown in FIG. 7, the network intention monitoring system 701 includes a monitoring intention obtaining module 7001, a monitoring intention classification module 7002, a monitoring intention analysis module 7003, and a monitoring result presentation module 7004. The monitoring intention obtaining module 7001 is mainly responsible for providing, on the network intention monitoring system 701, an input interface of a network intention that needs to be monitored or synchronizing, from a third-party system or platform, a network intention that needs to be monitored. For example, the monitoring intention obtaining module 7001 synchronizes network intention information and/or converted information from the third-party system or platform through an API open interface. The monitoring intention classification module 7002 is responsible for classifying network intention information that needs to be monitored into a plurality of types of network intention sub-information according to a network intention classification principle. The monitoring intention analysis module 7003 is responsible for inputting the plurality of types of to-be-monitored network intention sub-information into corresponding analysis engines for monitoring and analysis, and inputting analysis results obtained by the plurality of analysis engines into a monitoring engine to obtain final monitoring result information through analysis. The monitoring result information provides a result of comparison with a network intention of the user. The monitoring result presentation module 7004 is responsible for presenting the monitoring result information and synchronizing the monitoring result information to a third-party system or platform through an API open interface.

In some embodiments, the system shown in FIG. 7 may be the network intention monitoring platform 202 in the foregoing embodiments, and may implement all content in the embodiment shown in FIG. 2. In some embodiments, the monitoring intention obtaining module 7001 implements all functions of the monitoring intention obtaining module 2020 in FIG. 2; the monitoring intention classification module 7002 implements all functions of the monitoring intention classification module 2021 in FIG. 2; the monitoring intention analysis module 7003 implements all functions of the monitoring intention analysis module 2022 in FIG. 2; and the monitoring result presentation module 7004 implements all functions of the monitoring result presentation module 2023 in FIG. 2. For a specific implementation, refer to the working procedure in FIG. 3. A method is as follows:
According to the operation in S301 in FIG. 3, the monitoring intention obtaining module 7001 obtains a to-be-monitored network intention, where the network intention includes a plurality of network sub-intentions. The network intention refers to an expectation of a user of a network for a network device and function implementation, and mainly includes various network operations, for example, switching, routing, a service chain, security, quality of service, and compliance audit, and further includes one or more policies, settings, configurations, and the like defined for each network element device (for example, a switch, a router, a server, or a storage device). Based on dimensions of a configuration operation and a network function of a network element device in a network, a network intention may be classified into a plurality of network sub-intentions. The plurality of network sub-intentions include a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service KPI indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. For example, in FIG. 1, "all terminal devices can access each other and are allowed to access the server B, but are not allowed to access the server A" is a service reachability intention. A service quality of service network intention refers to an expectation of the user for quality of service and service experience of a service application in a network, and the quality of service and the service experience of the service application may be measured by using a service quality of service parameter indicator. The parameter indicator includes a network link packet loss rate and/or a network link packet loss rate threshold, a network link delay and/or a network link delay threshold, a network link jitter and/or a network link jitter threshold, a network link throughput and/or a network link throughput threshold, network bandwidth utilization and/or a network bandwidth utilization threshold, and/or a user experience indicator of the service application. Typical user experience indicators of service applications include an MOS value of an audio service application and a VMOS value of a video service application. A security network intention refers to a security policy specified by the user for a network, including a policy for controlling mutual access between network services, a physical network partition isolation policy, a logical network isolation policy, a tenant isolation policy, and/or a service threat prevention policy. A compliance network intention refers to a requirement of the user for network compliance, compliance that satisfies an industry of the user, and a user-defined compliance requirement, for example, a payment card industry data security standard PCI DSS in the financial industry. An audit network intention refers to an audit requirement of the user for a network, for example, a computing resource usage audit and a network resource usage audit. A fault network intention refers to a requirement of the user for network fault analysis, for example, the user expects to perform analysis and provide alarms for a network device fault, a resource specification fault, and a network security fault.

A manner in which the monitoring intention obtaining module 7001 obtains the to-be-monitored network intention includes: 1. The monitoring intention obtaining module 7001 provides an input page of a to-be-monitored network intention; and after operation and maintenance personnel inputs a network intention that needs to be monitored, the monitoring intention obtaining module 7001 obtains the network intention. 2. The monitoring intention obtaining module 7001 synchronizes a network intention of the user from the network management control platform 201 in FIG. 2 through an API open interface, and uses the network intention of the user as the to-be-monitored network intention.

After the monitoring intention obtaining module 7001 obtains the to-be-monitored network intention, a monitoring intention classification module 7002 may classify the network intention into a plurality of network sub-intentions based on dimensions of a network operation and a network function corresponding to the network intention.

According to the operation in S303 in FIG. 3, a plurality of pieces of analysis information are determined for the plurality of network sub-intentions based on the plurality of network sub-intentions, real-time network information, and a plurality of analysis engines corresponding to the plurality of network sub-intentions.

The monitoring intention analysis module 7003 determines the plurality of pieces of analysis information for the plurality of network sub-intentions based on the plurality of network sub-intentions, the real-time network information, and the plurality of analysis engines corresponding to the plurality of network sub-intentions. A function of an analysis engine is to analyze, based on real-time information of a current network, a policy and an indicator included in a type of network sub-intention, to obtain analysis information of the current network for the network sub-intention. Based on dimensions of a configuration operation and a network function of a network element device in a network, a network intention may be classified into a plurality of network sub-intentions. The plurality of network sub-intentions include a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service KPI indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. The real-time network information includes configuration information of a network element device in a network, network topology data, port status information of the network element device, forwarding information of the network element device, log and alarm information of the network element device, KPI data from the network element device in the network, and/or service flow statistics information. The forwarding information of the network device includes an ARP entry, a MAC entry, and/or a FIB entry. The KPI data from the network element device in the network includes memory and computing resource information, packets received and sent through an interface of the network element device in the network, and/or packet loss statistics information. The service flow statistics information includes a data packet forwarding delay, packet loss statistics information, jitter information, and/or traffic statistics information. Service reachability sub-intention analysis information is determined based on the service reachability sub-intention, the real-time network information, and an analysis engine corresponding to the service reachability sub-intention; service quality of service sub-intention analysis information is determined based on the service quality of service sub-intention, the real-time network information, and an analysis engine corresponding to the service quality of service sub-intention; service security sub-intention analysis information is determined based on the service security sub-intention, the real-time network information, and an analysis engine corresponding to the service security sub-intention; service compliance sub-intention analysis information is determined based on the service compliance sub-intention, the real-time network information, and an analysis engine corresponding to the service compliance sub-intention; service audit sub-intention analysis information is determined based on the service audit sub-intention, the real-time network information, and an analysis engine corresponding to the service audit sub-intention; and/or service fault sub-intention analysis information is determined based on the service fault sub-intention, the real-time network information, and an analysis engine corresponding to the service fault sub-intention.

According to the operation in S305 in FIG. 3, the monitoring intention analysis module 7003 determines monitoring result information based on the plurality of pieces of analysis information and a monitoring engine.

The monitoring intention analysis module 7003 determines monitoring result information based on the plurality of pieces of analysis information and a monitoring engine. The monitoring engine may determine the monitoring result information based on a comparison result corresponding to each of the plurality of pieces of analysis information. For example, the network intention of the operation and maintenance personnel includes the service reachability sub-intention and the service security sub-intention. In S303, the monitoring intention analysis module 7003 obtains service reachability sub-intention analysis information and a comparison result, and service security sub-intention analysis information and a comparison result. For example, the comparison result corresponding to the service reachability sub-intention satisfies the service reachability sub-intention, and the comparison result corresponding to the service security sub-intention satisfies the service security sub-intention. In some embodiments, the monitoring engine performs determining based on whether each piece of analysis information and a comparison result satisfy a corresponding network sub-intention. When each comparison result satisfies a corresponding network sub-intention, the monitoring result information is that the to-be-monitored network intention satisfies an expectation of the user for the network intention. If one comparison result does not satisfy a corresponding network sub-intention, the monitoring result information is that the to-be-monitored network intention does not satisfy the expectation of the user for the network intention. For example, the network intention of the operation and maintenance personnel includes the service reachability sub-intention and the service security sub-intention. In S303, the monitoring intention analysis module 7003 obtains service reachability sub-intention analysis information and a comparison result, and service security sub-intention analysis information and a comparison result. For example, the comparison result corresponding to the service reachability sub-intention satisfies the service reachability sub-intention, and the comparison result corresponding to the service security sub-intention does not satisfy the service security sub-intention. After analysis is performed by the monitoring engine, the monitoring result information is that the to-be-monitored network intention does not satisfy the expectation of the user for the network intention.

In some embodiments, the monitoring engine may assign different weights to all types of analysis information and all types of comparison results based on a health degree evaluation model to obtain scores of all the types of comparison results, and summarize the scores of all the types of comparison results to obtain a total score. For example, a full score of the health degree evaluation model is 100 points. The operation and maintenance personnel may assign 100 points to all types of comparison results based on a network characteristic and an operation and maintenance habit. Full scores of all the types of comparison results need to be 100 points through summarization. A full score of the comparison result corresponding to the service reachability sub-intention is 20 points, a full score of the comparison result corresponding to the service quality of service sub-intention is 20 points, a full score of the comparison result corresponding to the service security sub-intention is 20 points, a full score of the comparison result corresponding to the service compliance sub-intention is 10 points, a full score of the comparison result corresponding to the service audit sub-intention is 10 points, a full score of the comparison result corresponding to the service fault sub-intention is 20 points, and a score of each type of comparison result that does not satisfy a network sub-intention is 0 points. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user.

According to the operation in S307 in FIG. 3, the monitoring result presentation module 7004 performs network optimization requirement analysis based on the monitoring result information.

In some embodiments, the monitoring engine obtains the monitoring result information based on a health degree evaluation model, and the monitoring result information is obtained through summarization based on a score of a comparison result obtained by an analysis engine corresponding to each type of sub-intention. For example, a case in which a total score in the monitoring result information is greater than 80 points indicates a good state, indicating that a current network running status satisfies a network intention of the user and the network running status does not need to be optimized; and a case in which the total score is less than 80 points indicates an abnormal state, indicating that the current network running status does not satisfy a network intention of the user and optimization or repairing is to be performed based on a policy and an indicator corresponding to an item whose score is abnormal. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user. The comparison results corresponding to the service quality of service sub-intention and the service compliance sub-intention are items whose scores are abnormal, and network optimization needs to be performed on policies and indicators corresponding to the service quality of service sub-intention and the service compliance sub-intention.

The modules shown in FIG. 7 may be software function modules or virtual function modules, or may be hardware modules. In some embodiments, a plurality of modules in these modules may be integrated together and represented as one module. In terms of physical locations, the plurality of modules may be on a same hardware device, or may be distributed on different hardware devices.

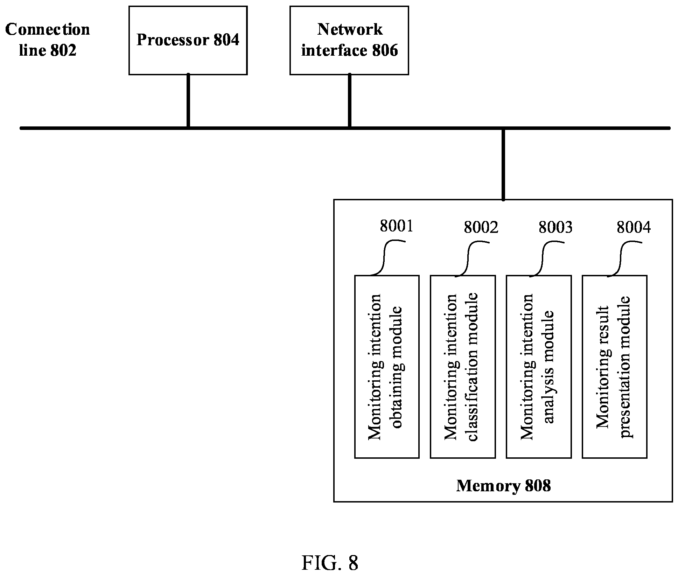

FIG. 8 is a schematic diagram of a structure of a network intention monitoring system according to an embodiment of this application. The system shown in FIG. 8 may be the network intention monitoring platform 202 in the foregoing embodiments, and may implement all content in the embodiment shown in FIG. 2. The system is applied to a network scenario in which network intention monitoring is performed. As shown in FIG. 8, the system includes a processor 804, a network interface 806, a memory 808, and various connection lines 802 that connect the processor 804, the network interface 806, and the memory 808. The network interface 806 is configured to perform communication between the system and the outside, and the memory 808 is configured to store a program module and data. The program module includes a monitoring intention obtaining module 8001, a monitoring intention classification module 8002, a monitoring intention analysis module 8003, and a monitoring result presentation module 8004. In some embodiments, all the modules shown in FIG. 7 are software modules, and the memory 808 in FIG. 8 includes the software modules shown in FIG. 7.

The memory 808 may include a high-speed random access memory (RAM: Random Access Memory), or may further include a non-volatile memory (Non-volatile Memory), for example, at least one magnetic disk memory. The processor 804 may invoke program code stored in the memory 808, to execute the method described in the foregoing embodiments. For specific execution, refer to the foregoing method embodiments. Details are not described herein again. The processor 804 may be a central processing unit (CPU), a network processor (NP), or another physical chip having a processing capability A communication connection between the system and at least one other network element or system may be implemented through at least one network interface 806 (which may be a wired interface and/or a wireless interface) over the Internet, a wide area network, a local area network, a metropolitan area network, and/or the like. For a specific implementation, refer to the working procedure in FIG. 3. A method is as follows:

According to the operation in S301 in FIG. 3, the monitoring intention obtaining module 8001 obtains a to-be-monitored network intention, where the network intention includes a plurality of network sub-intentions. The network intention refers to an expectation of a user of a network for a network device and function implementation, and mainly includes various network operations, for example, switching, routing, a service chain, security, quality of service, and compliance audit, and further includes one or more policies, settings, configurations, and the like defined for each network element device (for example, a switch, a router, a server, or a storage device). Based on dimensions of a configuration operation and a network function of a network element device in a network, a network intention may be classified into a plurality of network sub-intentions. The plurality of network sub-intentions include a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service KPI indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. For example, in FIG. 1, "all terminal devices can access each other and are allowed to access the server B, but are not allowed to access the server A" is a service reachability intention. A service quality of service network intention refers to an expectation of the user for quality of service and service experience of a service application in a network, and the quality of service and the service experience of the service application may be measured by using a service quality of service parameter indicator. The parameter indicator includes a network link packet loss rate and/or a network link packet loss rate threshold, a network link delay and/or a network link delay threshold, a network link jitter and/or a network link jitter threshold, a network link throughput and/or a network link throughput threshold, network bandwidth utilization and/or a network bandwidth utilization threshold, and/or a user experience indicator of the service application. Typical user experience indicators of service applications include an MOS value of an audio service application and a VMOS value of a video service application. A security network intention refers to a security policy specified by the user for a network, including a policy for controlling mutual access between network services, a physical network partition isolation policy, a logical network isolation policy, a tenant isolation policy, and/or a service threat prevention policy. A compliance network intention refers to a requirement of the user for network compliance, compliance that satisfies an industry of the user, and a user-defined compliance requirement, for example, a payment card industry data security standard PCI DSS in the financial industry. An audit network intention refers to an audit requirement of the user for a network, for example, a computing resource usage audit and a network resource usage audit. A fault network intention refers to a requirement of the user for network fault analysis, for example, the user expects to perform analysis and provide alarms for a network device fault, a resource specification fault, and a network security fault.

A manner in which the monitoring intention obtaining module 8001 obtains the to-be-monitored network intention includes: 1. The monitoring intention obtaining module 8001 provides an input page of a to-be-monitored network intention; and after operation and maintenance personnel inputs a network intention that needs to be monitored, the monitoring intention obtaining module 8001 obtains the network intention. 2. The monitoring intention obtaining module 8001 synchronizes a network intention of the user from the network management control platform 201 in FIG. 2 through an API open interface, and uses the network intention of the user as the to-be-monitored network intention.

After the monitoring intention obtaining module 8001 obtains the to-be-monitored network intention, the monitoring intention classification module 8002 may classify the network intention into a plurality of network sub-intentions based on dimensions of a network operation and a network function corresponding to the network intention.

According to the operation in S303 in FIG. 3, a plurality of pieces of analysis information are determined for the plurality of network sub-intentions based on the plurality of network sub-intentions, real-time network information, and a plurality of analysis engines corresponding to the plurality of network sub-intentions.

The monitoring intention analysis module 8003 determines the plurality of pieces of analysis information for the plurality of network sub-intentions based on the plurality of network sub-intentions, the real-time network information, and the plurality of analysis engines corresponding to the plurality of network sub-intentions. A function of an analysis engine is to analyze, based on real-time information of a current network, a policy and an indicator included in a type of network sub-intention, to obtain analysis information of the current network for the network sub-intention. Based on dimensions of a configuration operation and a network function of a network element device in a network, a network intention may be classified into a plurality of network sub-intentions. The plurality of network sub-intentions include a service reachability sub-intention, a service quality of service sub-intention, a service security sub-intention, a service compliance sub-intention, a service audit sub-intention, and/or a service fault sub-intention. The service reachability sub-intention refers to a requirement of a user for basic connectivity of a network in which a service is located, a data forwarding path, and/or reachability of a logical network for user service provisioning. The service quality of service sub-intention refers to a requirement of the user for a service quality of service KPI indicator. For example, the user has a requirement for a packet loss rate, a jitter, and a user experience indicator corresponding to an audio and video service application. The service security sub-intention refers to a requirement of the user for a network security protection capability. The service compliance sub-intention refers to a requirement of the user for a network compliance capability. The service audit sub-intention refers to a requirement of the user for a service audit policy and report. The service fault sub-intention refers to a requirement of the user for presenting and analyzing fault information in a network intention. The real-time network information includes configuration information of a network element device in a network, network topology data, port status information of the network element device, forwarding information of the network element device, log and alarm information of the network element device, KPI data from the network element device in the network, and/or service flow statistics information. The forwarding information of the network device includes an ARP entry, a MAC entry, and/or a FIB entry. The KPI data from the network element device in the network includes memory and computing resource information, packets received and sent through an interface of the network element device in the network, and/or packet loss statistics information. The service flow statistics information includes a data packet forwarding delay, packet loss statistics information, jitter information, and/or traffic statistics information. Service reachability sub-intention analysis information is determined based on the service reachability sub-intention, the real-time network information, and an analysis engine corresponding to the service reachability sub-intention; service quality of service sub-intention analysis information is determined based on the service quality of service sub-intention, the real-time network information, and an analysis engine corresponding to the service quality of service sub-intention; service security sub-intention analysis information is determined based on the service security sub-intention, the real-time network information, and an analysis engine corresponding to the service security sub-intention; service compliance sub-intention analysis information is determined based on the service compliance sub-intention, the real-time network information, and an analysis engine corresponding to the service compliance sub-intention; service audit sub-intention analysis information is determined based on the service audit sub-intention, the real-time network information, and an analysis engine corresponding to the service audit sub-intention; and/or service fault sub-intention analysis information is determined based on the service fault sub-intention, the real-time network information, and an analysis engine corresponding to the service fault sub-intention.

According to the operation in S305 in FIG. 3, the monitoring intention analysis module 8003 determines monitoring result information based on the plurality of pieces of analysis information and a monitoring engine.

The monitoring intention analysis module 8003 determines monitoring result information based on the plurality of pieces of analysis information and a monitoring engine. The monitoring engine may determine the monitoring result information based on a comparison result corresponding to each of the plurality of pieces of analysis information. For example, the network intention of the operation and maintenance personnel includes the service reachability sub-intention and the service security sub-intention. In S303, the monitoring intention analysis module 8003 obtains service reachability sub-intention analysis information and a comparison result, and service security sub-intention analysis information and a comparison result. For example, the comparison result corresponding to the service reachability sub-intention satisfies the service reachability sub-intention, and the comparison result corresponding to the service security sub-intention satisfies the service security sub-intention. In some embodiments, the monitoring engine performs determining based on whether each piece of analysis information and a comparison result satisfy a corresponding network sub-intention. When each comparison result satisfies a corresponding network sub-intention, the monitoring result information is that the to-be-monitored network intention satisfies an expectation of the user for the network intention. If one comparison result does not satisfy a corresponding network sub-intention, the monitoring result information is that the to-be-monitored network intention does not satisfy the expectation of the user for the network intention. For example, the network intention of the operation and maintenance personnel includes the service reachability sub-intention and the service security sub-intention. In S303, the monitoring intention analysis module 8003 obtains service reachability sub-intention analysis information and a comparison result, and service security sub-intention analysis information and a comparison result. For example, the comparison result corresponding to the service reachability sub-intention satisfies the service reachability sub-intention, and the comparison result corresponding to the service security sub-intention does not satisfy the service security sub-intention. After analysis is performed by the monitoring engine, the monitoring result information is that the to-be-monitored network intention does not satisfy the expectation of the user for the network intention.

In some embodiments, the monitoring engine may assign different weights to all types of analysis information and all types of comparison results based on a health degree evaluation model to obtain scores of all the types of comparison results, and summarize the scores of all the types of comparison results to obtain a total score. For example, a full score of the health degree evaluation model is 100 points. The operation and maintenance personnel may assign 100 points to all types of comparison results based on a network characteristic and an operation and maintenance habit. Full scores of all the types of comparison results need to be 100 points through summarization. A full score of the comparison result corresponding to the service reachability sub-intention is 20 points, a full score of the comparison result corresponding to the service quality of service sub-intention is 20 points, a full score of the comparison result corresponding to the service security sub-intention is 20 points, a full score of the comparison result corresponding to the service compliance sub-intention is 10 points, a full score of the comparison result corresponding to the service audit sub-intention is 10 points, a full score of the comparison result corresponding to the service fault sub-intention is 20 points, and a score of each type of comparison result that does not satisfy a network sub-intention is 0 points. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user.

According to the operation in S307 in FIG. 3, the monitoring result presentation module 8004 performs network optimization requirement analysis based on the monitoring result information.

In some embodiments, the monitoring engine obtains the monitoring result information based on a health degree evaluation model, and the monitoring result information is obtained through summarization based on a score of a comparison result obtained by an analysis engine corresponding to each type of sub-intention. For example, a case in which a total score in the monitoring result information is greater than 80 points indicates a good state, indicating that a current network running status satisfies a network intention of the user and the network running status does not need to be optimized; and a case in which the total score is less than 80 points indicates an abnormal state, indicating that the current network running status does not satisfy a network intention of the user and optimization or repairing is to be performed based on a policy and an indicator corresponding to an item whose score is abnormal. For example, a to-be-monitored network intention A is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 20 points, a score of a comparison result corresponding to a service security sub-intention is 20 points, a score of a comparison result corresponding to a service compliance sub-intention is 10 points, a score of a comparison result corresponding to a service audit sub-intention is 10 points, and a score of a comparison result corresponding to a service fault sub-intention is 20 points, a total score is 100 points. This indicates that a network running status completely satisfies a network intention of the user. For example, a to-be-monitored network intention B is analyzed by analysis engines to obtain the following scores of comparison results corresponding to various sub-intentions: If a score of a comparison result corresponding to a service reachability sub-intention is 20 points, a score of a comparison result corresponding to a service quality of service sub-intention is 0 points, a score of a comparison result corresponding to a service security sub-intention is 20 points, a score of a comparison result corresponding to a service compliance sub-intention is 0 points, a score of a comparison result corresponding to a service audit sub-intention is 10 points, and a score of a comparison result corresponding to a service fault sub-intention is 20 points, a total score is 70 points. This indicates that a network running status does not satisfy a network intention of the user. The comparison results corresponding to the service quality of service sub-intention and the service compliance sub-intention are items whose scores are abnormal, and network optimization needs to be performed on policies and indicators corresponding to the service quality of service sub-intention and the service compliance sub-intention.

The operation sequence in this specification, claims, and accompanying drawings of this application is not limited to a specific sequence or order in the description. It can be understood that the data termed in such a way is used simultaneously or in a changeable order in proper circumstances, so that embodiments described herein can be implemented in an order other than the order illustrated or described in the accompanying drawings.

The foregoing one or more technical solutions in embodiments of this application have at least the following technical effects:
According to the foregoing method provided in embodiments of this application, after a network intention is delivered, the network intention is classified into a plurality of network sub-intentions; a plurality of pieces of analysis information is obtained for different types of network sub-intentions based on real-time network information and analysis engines corresponding to the network sub-intentions; monitoring result information is obtained based on the plurality of pieces of analysis information and a monitoring engine; and network optimization requirement analysis is performed based on the monitoring result information. According to the method provided in embodiments of this application, operation and maintenance personnel may monitor and verify a running status of a network intention in a current network, discover a difference between a network running status and the network intention in real time, and optimize and adjust the network in a timely manner. In this way, a case in which passive network fault locating is performed when a network fault occurs is avoided, real-time accuracy of the network intention is ensured, and network operation and maintenance efficiency is improved.

The technical solutions provided in this application are described in detail above. The principle and implementation of this application are described in this application by using specific examples. The description about embodiments is merely provided to help understand the method and core ideas of this application. In addition, a person of ordinary skill in the art can make modifications to this application in terms of the specific implementations and application scopes based on the ideas of this application. In conclusion, the content of this specification shall not be construed as a limitation to this application.

## Claims

1. A network intention monitoring method, wherein the method comprises:
obtaining a to-be-monitored network intention, wherein the network intention comprises a plurality of network sub-intentions, and the plurality of network sub-intentions are respectively corresponding to a plurality of types;
determining a plurality of pieces of analysis information for the plurality of network sub-intentions based on the plurality of network sub-intentions, real-time network information, and a plurality of analysis engines corresponding to the plurality of network sub-intentions;
determining monitoring result information based on the plurality of pieces of analysis information and a monitoring engine; and
performing network optimization requirement analysis based on the monitoring result information.

2. The method according to claim 1, wherein the method for the "obtaining a to-be-monitored network intention, wherein the network intention comprises a plurality of network sub-intentions, and the plurality of network sub-intentions are respectively corresponding to a plurality of types" comprises:
the plurality of network sub-intentions are respectively corresponding to a plurality of types, and the plurality of types comprise a service reachability type, a service quality of service type, a service security type, a service compliance type, a service audit type, and/or a service fault type.

3. The method according to claim 1 or 2, wherein the method for the determining a plurality of pieces of analysis information for the plurality of network sub-intentions based on the plurality of network sub-intentions, real-time network information, and a plurality of analysis engines corresponding to the plurality of network sub-intentions comprises:
determining service reachability sub-intention analysis information based on a service reachability sub-intention, the real-time network information, and an analysis engine corresponding to the service reachability sub-intention;
determining service quality of service sub-intention analysis information based on a service quality of service sub-intention, the real-time network information, and an analysis engine corresponding to the service quality of service sub-intention;
determining security sub-intention analysis information based on a service security sub-intention, the real-time network information, and an analysis engine corresponding to the service security sub-intention;
determining compliance sub-intention analysis information based on a service compliance sub-intention, the real-time network information, and an analysis engine corresponding to the service compliance sub-intention;
determining audit sub-intention analysis information based on a service audit sub-intention, the real-time network information, and an analysis engine corresponding to the service audit sub-intention; and/or
determining fault sub-intention analysis information based on a fault sub-intention, the real-time network information, and an analysis engine corresponding to the fault sub-intention.

4. The method according to claim 1 or 2, wherein the method for the determining a plurality of pieces of analysis information for the plurality of network sub-intentions based on the plurality of network sub-intentions, real-time network information, and a plurality of analysis engines corresponding to the plurality of network sub-intentions comprises:
the plurality of pieces of analysis information comprise service reachability sub-intention analysis information, service quality of service sub-intention analysis information, security sub-intention analysis information, compliance sub-intention analysis information, audit sub-intention analysis information, and/or fault sub-intention analysis information.

5. The method according to claim 1, wherein the method for the performing network optimization requirement analysis based on the monitoring result information comprises:
if the monitoring result information satisfies the network intention, network optimization is not required; and/or
if the monitoring result information does not satisfy the network intention, network optimization is required.

6. A network intention monitoring system, comprising:
a monitoring intention obtaining module, configured to obtain a to-be-monitored network intention;
a monitoring intention classification module, configured to classify the network intention into a plurality of network sub-intentions, wherein the plurality of network sub-intentions are respectively corresponding to a plurality of types;
a monitoring intention analysis module, configured to determine a plurality of pieces of analysis information for the plurality of network sub-intentions based on the plurality of network sub-intentions, real-time network information, and a plurality of analysis engines corresponding to the plurality of network sub-intentions, wherein
the monitoring intention analysis module is further configured to determine monitoring result information based on the plurality of pieces of analysis information and a monitoring engine; and
a monitoring result presentation module, configured to perform network optimization requirement analysis based on the monitoring result information.

7. The system according to claim 6, wherein the plurality of network sub-intentions are respectively corresponding to a plurality of types, and the plurality of types comprise a service reachability type, a service quality of service type, a service security type, a service compliance type, a service audit type, and/or a service fault type.

8. The system according to claim 6 or 7, wherein the monitoring intention analysis module is specifically configured to:
determine service reachability sub-intention analysis information based on a service reachability sub-intention, the real-time network information, and an analysis engine corresponding to the service reachability sub-intention;
determine service quality of service sub-intention analysis information based on a service quality of service sub-intention, the real-time network information, and an analysis engine corresponding to the service quality of service sub-intention;
determine security sub-intention analysis information based on a service security sub-intention, the real-time network information, and an analysis engine corresponding to the service security sub-intention;
determine compliance sub-intention analysis information based on a service compliance sub-intention, the real-time network information, and an analysis engine corresponding to the service compliance sub-intention;
determine audit sub-intention analysis information based on a service audit sub-intention, the real-time network information, and an analysis engine corresponding to the service audit sub-intention; and/or
determine fault sub-intention analysis information based on a fault sub-intention, the real-time network information, and an analysis engine corresponding to the fault sub-intention.

9. The system according to claim 6 or 7, wherein the plurality of pieces of analysis information comprise the service reachability sub-intention analysis information, the service quality of service sub-intention analysis information, the security sub-intention analysis information, the compliance sub-intention analysis information, the audit sub-intention analysis information, and/or the fault sub-intention analysis information.

10. The system according to claim 6, wherein
if the monitoring result information satisfies the network intention, network optimization is not required; and/or
if the monitoring result information does not satisfy the network intention, network optimization is required.

11. A computer-readable storage medium, comprising instructions, wherein when the instructions are run on a computer, the computer is enabled to perform the method according to any one of claims 1 to 5.
